# EUROPÄISCHE PATENTSCHRIFT

(11) **EP 3 510 072 B1**
(45) Veröffentlichungstag und Bekanntmachung des Hinweises auf die Patenterteilung: **24.06.2020**
(21) Anmeldenummer: 17758893.6
(22) Anmeldetag: 04.09.2017
(51) Int. Cl.: C08G 18/76, C08G 18/34, C08K 5/521, C08G 101/00

(54) **NICHT BRANDWEITERLEITENDE POLYAMIDSCHÄUME ZUR KAVITÄTENVERFÜLLUNG IM BERGBAU**
POLYAMIDE FOAMS WHICH DO NOT EXTEND FIRE FOR FILLING CAVITIES IN MINING
MOUSSES DE POLYAMIDE IGNIFUGES DESTINEES A REMPLIR DES CAVITES DANS UNE MINE

(30) Priorität: 06.09.2016 EP 16187417
(43) Veröffentlichungstag der Anmeldung: 17.07.2019
(73) Patentinhaber: Construction Research & Technology GmbH, 83308 Trostberg (DE)
(72) Erfinder: WALTHER, Burkhard, 26123 Oldenburg (DE); FEICHTENSCHLAGER, Bernhard, 83308 Trostberg (DE); HERRMANN, Christoph, 83308 Trostberg (DE)
(74) Vertreter: BASF IP Association
(86) Internationale Anmeldenummer: PCT/EP2017/072096
(87) Internationale Veröffentlichungsnummer: WO 2018/046437

(56) Entgegenhaltungen:
- WO-A1-93/15121
- WO-A1-2016/127016

## Beschreibung

Die vorliegende Erfindung betrifft ein Verfahren zur Herstellung von nicht brandweiterleitenden Polyamidschäumen sowie ein Verfahren zum Verfüllen von Kavitäten im Bergbau, Tunnelbau, Tiefbau oder bei der Öl-und Gasgewinnung.

Aus Sicherheitsgründen müssen im Tiefbau und Bergbau, z. B. Tunnelbau, Stollenbau oder Abbau, auftretende Kavitäten verfüllt werden, um eine Ablösung von Gestein oder Einstürze zu verhindern. In der Regel geschieht dies mit Hilfe von selbstschäumenden, härtbaren Zusammensetzungen. Die härtbare Form entsteht durch Mischen von zwei Komponenten, die anschließend in die Kavität eingebracht werden, wo sie unter den Umgebungsbedingungen einen Schaum bilden und in einer chemischen Reaktion aushärten. Ein Beispiel dafür sind Polyurethane oder Polyharnstoffsilikate.

Im Kohlebergbau dürfen jedoch nur Kavitätenverfüller eingesetzt werden, die einen Brand nicht weiterleiten. Das Brandweiterleitungsverhalten kann durch den sogenannten Punking-Test (BS 5946:1980) bestimmt werden. Bei diesem Test wird ein Schaumstück lokal mit einem Bunsenbrenner erhitzt und man prüft, ob die Brandfront nach dem Entfernen der Flamme fortschreitet. Viele der klassischen Kavitätenverfüller erfüllen diese Anforderung nicht. Bekannte Beispiele für nicht brandweiterleitende Kavitätenverfüller sind Phenol-Formaldehyd-Harz basierte Schäume. Allerdings unterliegt der Phenolgehalt von Zubereitungen gesetzlichen Reglementierungen. Aus arbeitshygienischen Gründen ist es daher wünschenswert, über phenolfreie Alternativen zu verfügen.

Aus der DE 2 150 151 A1 sind Schäume aus aromatischen Polyamiden bekannt, die nicht entflammbar oder selbstlöschend sind. Ihre Herstellung erfolgt durch Umsetzung eines aromatischen Diisocyanats mit zumindest einer difunktionellen aromatischen Verbindung mit Säurefunktion in Masse in geschmolzenem Zustand. Um die aromatischen Dicarbonsäuren aufzuschmelzen, sind jedoch Temperaturen von 180 bis 320°C erforderlich. Dieser Umstand verunmöglicht den Einsatz der beschriebenen Schäume im Bergbau; hier ist ein Verfahren wünschenswert, bei dem zur Schaumherstellung zwei bei Umgebungstemperaturen flüssige Komponenten gemischt werden. Versuche, die festen aromatischen Dicarbonsäuren in Verdünnern oder Lösungsmitteln zu lösen oder zu dispergieren und in dieser Form einzusetzen, führten zu einer Verschlechterung der mechanischen Eigenschaften der Schäume.

Die WO 2016/127016 offenbart Zusammensetzungen zur Bildung hitzebeständiger Schäume, welche ein organisches Polyisocyanat, eine Polycarbonsäure, ein Polyol, ein Tensid und einen Katalysator umfasst. Als geeignete Polycarbonsäure sind unter anderem Dimer- und Trimerfettsäuren genannt.

Die WO 93/15121 beschreibt ein Verfahren zur Herstellung thermoplastischer oder duroplastischer Kunststoffe mit Amidgruppen durch katalytische Umsetzung von mehrwertigen Isocyanaten mit Carbonsäuren sowie gegebenenfalls Alkoholen oder mehrwertigen Aminen unter Bildung von CO₂.

Der vorliegenden Erfindung liegt die Aufgabe zugrunde, ein Verfahren zur Herstellung nicht brandweiterleitender, aromatischer Polyamidschäume anzugeben, das sich zweier bei Umgebungstemperaturen flüssiger Komponenten bedient und das Schäume geeigneter mechanischer Festigkeit liefert.

Die Aufgabe wird gelöst durch ein Verfahren zur Herstellung von nicht brandweiterleitenden Polyamidschäumen durch Vermischen
(i) einer flüssigen Isocyanatkomponente, die wenigstens ein Polyisocyanat enthält und worin das Molverhältnis von aromatischen Isocyanat-Gruppen zur Summe von aromatischen und aliphatischen Isocyanat-Gruppen wenigstens 60 Mol-% beträgt, mit
(ii) wenigstens einer flüssigen Isocyanat-reaktiven Komponente, welche einen Reaktivverdünner enthält und der Reaktivverdünner umfasst
   (a) einen kettenverlängernden und/oder vernetzenden Reaktivverdünner, der ausgewählt ist unter aliphatischen verzweigten C₂₄₋₆₆-Polycarbonsäuren, alicyclischen C₂₄₋₆₆-Polycarbonsäuren und Partialestern von Polycarbonsäuren mit wenigstens zwei unveresterten Carboxylgruppen und/oder
   (b) einen kettenabschließenden Reaktivverdünner, der ausgewählt ist unter aliphatischen verzweigten C₂₄₋₆₆-Monocarbonsäuren, alicyclischen C₂₄₋₆₆-Monocarbonsäuren und Partialestern von Polycarbonsäuren mit einer unveresterten Carboxylgruppe, und
(iii) gegebenenfalls einer festen Isocyanat-reaktiven Komponente,
wobei die flüssige Isocyanat-reaktive Komponente und/oder die feste Isocyanat-reaktive Komponente eine aromatische C₈₋₁₈-Polycarbonsäure und/oder ein Anhydrid davon umfasst.

Unter einer Polycarbonsäure wird vorliegend eine Carbonsäure verstanden, die mindestens zwei Carboxylgruppen aufweist, z. B. eine Dicarbonsäure,

Tricarbonsäure und/oder Tetracarbonsäure. Unter einer flüssigen Komponente wird vorliegend ein Stoff oder Stoffgemisch verstanden, das bei Umgebungsbedingungen (25°C, 1 bar) in flüssiger, pumpbarer Form vorliegt. Dies umfasst z. B. Lösungen oder Suspensionen, bevorzugt Lösungen.

Carboxylgruppen entwickeln bei der Umsetzung mit Isocyanaten Kohlendioxid; das entstehende Kohlendioxid wirkt als Treibmittel für die Schaumbildung. Aus der Carboxylgruppe und der Isocyanatgruppe bildet sich eine Amidbindung aus. Erfindungsgemäß werden bestimmte Reaktivverdünner mitverwendet, die eine vereinfachte Handhabung der sonst festen Polycarbonsäuren und eine Umsetzung unter vergleichsweise milden Bedingungen gestatten. Die Reaktivverdünner nehmen an der Polyadditionsreaktion teil; sie dampfen daher aus dem fertigen Schaum nicht aus und verschlechtern seine mechanischen Eigenschaften nicht wesentlich.

Im vorliegenden Verfahren zur Herstellung von nicht brandweiterleitenden Polyamidschäumen werden eine flüssige Isocyanatkomponente, die ein Polyisocyanat enthält, und eine flüssige Isocyanat-reaktive Komponente, die einen Reaktivverdünner enthält, miteinander vermischt. Optional kann eine zusätzliche feste Isocyanat-reaktive Komponente zugegeben oder in der flüssigen Isocyanat-reaktiven Komponente vordispergiert werden. Der erfindungsgemäß verwendete Reaktivverdünner kann kettenverlängernd und/oder vernetzend wirken, wenn er über wenigstens zwei Carboxylgruppen verfügt, oder kettenabschließend, wenn er über eine Carboxylgruppe verfügt. Die flüssige und/oder feste Isocyanat-reaktive Komponente umfassen/umfasst zumindest eine aromatische C₈₋₁₈-Polycarbonsäure und/oder ein Anhydrid davon.

Vorzugsweise mischt man die Komponenten in solchen Mengen, dass 0,2 bis 2 Äquivalente Carbonsäuregruppen, gerechnet als Summe der Carbonsäure- und/oder Anhydridgruppen in der flüssigen Isocyanat-reaktiven Komponente und der festen Isocyanat-reaktiven Komponente, auf ein Äquivalent NCO-Gruppen der Isocyanatkomponente entfallen.

Das Mischen erfolgt geeigneter Weise bei einer Temperatur von 0 bis 80 °C, insbesondere 10 bis 60 °C. In der Regel müssen die Komponenten nicht oder nur geringfügig vorerwärmt bzw. temperiert werden, was die Ausübung des erfindungsgemäßen Verfahrens stark erleichtert. Das Schäumen setzt spontan ein und der zunächst flüssige viskose Schaum härtet von selbst aus. Die Reaktion ist leicht exotherm. Das Vermischen kann durch Mischen mit einem Rührorgan erfolgen. Vorzugsweise jedoch werden die Komponenten getrennt zu einem Mischaggregat gepumpt und dort, z. B. in einem statischen Mischer, homogenisiert.

Die flüssige Isocyanatkomponente enthält aromatische Polyisocyanate und kann aliphatische Polyisocyanate, einschließlich cycloaliphatischer Polyisocyanate, umfassen, mit der Maßgabe, dass das Molverhältnis von aromatischen Isocyanat-Gruppen zur Summe von aromatischen und aliphatischen Isocyanat-Gruppen wenigstens 60 Mol-%, vorzugsweise wenigstens 80 Mol-%, insbesondere wenigstens 90 Mol-% und besonders bevorzugt wenigstens 95 Mol-%, beträgt. In bestimmten Ausführungsformen enthält die flüssige Isocyanatkomponente im Wesentlichen ausschließlich Polyisocyanate mit ausschließlich aromatischen Isocyanatgruppen. Als aromatische Isocyanat-Gruppen werden solche Isocyanat-Gruppen angesehen, die direkt an einen aromatischen Ring gebunden sind. Als aliphatische Isocyanat-Gruppen werden solche Isocyanat-Gruppen angesehen, die an ein nicht-aromatisches Kohlenstoffatom gebunden sind. Daher sind beispielsweise die Isocyanatgruppen in m-Xylylendiisocyanat - obgleich das Molekül einen aromatischen Benzolring umfasst - als aliphatische Isocyanat-Gruppen anzusehen, da sie nur mittelbar über Methylengruppen an den Benzolring gebunden sind. Es wird vermutet, dass das Molverhältnis von aromatischen Isocyanat-Gruppen zur Summe von aromatischen und aliphatischen Isocyanat-Gruppen im angegebenen Bereich verantwortlich ist für die nicht brandweiterleitende Eigenschaft der erhaltenen Schäume.

Die Isocyanatkomponente weist vorzugsweise eine NCO-Funktionalität von mindestens 1,8, bevorzugt 1,8 bis 5 und stärker bevorzugt 2,1 bis 4, auf. Die einsetzbaren Polyisocyanate haben bevorzugt einen Gehalt an Isocyanatgruppen (berechnet als NCO, Molekulargewicht = 42) von 10 bis 60 Gew.-% bezogen auf das Polyisocyanat(gemisch), bevorzugt 15 bis 60 Gew.-% und besonders bevorzugt 20 bis 55 Gew.-%.

Beispiele aromatischer Polyisocyanate sind 2,2'-, 2,4'- und 4,4'-Diphenylmethandiisocyanat (MDI) und deren Isomerengemische, Mischungen aus monomeren Diphenylmethandiisocyanaten und höherkernigen Homologen des Diphenylmethandiisocyanats (Polymer-MDI), 2,4- oder 2,6-Toluylendiisocyanat (TDI) und deren Isomerengemische, 1,3- oder 1,4-Phenylen-diisocyanat, 1-Chlor-2,4-phenylendiisocyanat, 1,5-Naphthylendiisocyanat (NDI), Diphenylen-4,4'-diisocyanat, 4,4'-Diisocyanato-3,3'-dimethylbiphenyl, 3-Methyl-diphenylmethan-4,4'-diisocyanat, Tetramethylxylylendiisocyanat, 1,4-Diisocyanatobenzol oder Diphenylether-4,4'-diisocyanat.

Aliphatische Diisocyanate, die in begrenztem Umfang mitverwendet werden können, sind Tetramethylendiisocyanat, Hexamethylendiisocyanat (1,6-Diisocyanatohexan), Octamethylendiisocyanat, Decamethylendiisocyanat, Dodecamethylendiisocyanat, Tetradecamethylendiisocyanat, Derivate des Lysindiisocyanats, m- oder p-Xylylendiisocyanat ,Tetramethylxylylendiisocyanat, Trimethylhexandiisocyanat oder Tetramethylhexandiisocyanat, cycloaliphatische Diisocyanate wie 1,4-, 1,3- oder 1,2-Diisocyanatocyclohexan, 4,4'- oder 2,4'-Di(isocyanatocyclohexyl)methan, 1-Isocyanato-3,3,5-trimethyl-5-(isocyanatomethyl)cyclohexan (Isophorondiisocyanat), 1,3- oder 1,4-Bis(isocyanatomethyl)cyclohexan oder 2,4-, oder 2,6-Diisocyanato-1-methylcyclohexan sowie 3 (bzw. 4), 8 (bzw. 9)-Bis(isocyanato-methyl)-tricyclo[5.2.1.0²⁶]decan-Isomerengemische.

Als Polyisocyanate kommen auch Isocyanuratgruppen aufweisende Polyisocyanate, Uretdiondiisocyanate, Biuretgruppen aufweisende Polyisocyanate, Urethan- oder Allophanatgruppen aufweisende Polyisocyanate, Oxadiazintriongruppen enthaltende Polyisocyanate, Uretonimin-modifizierte Polyisocyanate von geradlinigen oder verzweigten C₄-C₂₀-Alkylendiisocyanaten, cycloaliphatischen Diisocyanaten in Betracht.

Weiterhin geeignet sind
1. Isocyanuratgruppen aufweisende Polyisocyanate von aromatischen, aliphatischen und/oder cycloaliphatischen Diisocyanaten. Bei den dabei vorliegenden Isocyanuraten handelt es sich insbesondere um cyclische Trimere der Diisocyanate, oder um Gemische mit ihren höheren, mehr als einen Isocyanuratring aufweisenden Homologen.
2. Uretdiondiisocyanate mit aromatisch, aliphatisch und/oder cycloaliphatisch gebundenen Isocyanatgruppen. Bei Uretdiondiisocyanaten handelt es sich um cyclische Dimerisierungsprodukte von Diisocyanaten.
3. Biuretgruppen aufweisende Polyisocyanate mit aromatisch, aliphatisch oder cycloaliphatisch gebundenen Isocyanatgruppen.
4. Urethan- und/oder Allophanatgruppen aufweisende Polyisocyanate mit aromatisch, aliphatisch oder cycloaliphatisch gebundenen Isocyanatgruppen, wie sie beispielsweise durch Umsetzung von überschüssigen Mengen an Diisocyanat mit mehrwertigen Alkoholen wie z.B. Trimethylolpropan, Neopentylglykol, Pentaerythrit, 1,4-Butandiol, 1,6-Hexandiol, 1,3-Propandiol, Ethylenglykol, Diethylenglykol, Glycerin, 1,2-Dihydroxypropan oder deren Gemische erhalten werden können.
5. Oxadiazintriongruppen enthaltende Polyisocyanate.
6. Uretonimin-modifizierte Polyisocyanate.

Polyisocyanate können auch in Form von Polyisocyanatpräpolymeren eingesetzt werden. Diese Polyisocyanatpräpolymere sind erhältlich, indem vorstehend beschriebene Polyisocyanate im Überschuss, beispielsweise bei Temperaturen von 30 bis 100°C, bevorzugt bei etwa 80°C, mit Polyolen zum Präpolymer umgesetzt werden.

Vorzugsweise werden als Polyisocyanate monomeres Diphenylmethandiisocyanat, beispielsweise 2,2'-Diphenylmethandiisocyanat, 2,4'-Diphenylmethandiisocyanat, 4,4'-Diphenylmethandiisocyanat oder Isomerengemische davon eingesetzt. Das Diphenylmethandiisocyanat kann auch als Mischung mit seinen Derivaten eingesetzt werden. Dabei kann Diphenylmethandiisocyanat besonders bevorzugt bis 10 Gew.-%, weiter besonders bevorzugt bis zu 5 Gew.-%, carbodiimid-, uretdion-, allophanat- oder uretoniminmodifiziertes Diphenylmethandiisocyanat, insbesondere carbodiimid-modifiziertes Diphenylmethandiisocyanat, enthalten.

Die flüssige Isocyanat-reaktive Komponente enthält einen Reaktivverdünner. Der Reaktivverdünner ist ausgewählt unter einem (a) kettenverlängernden und/oder vernetzenden Reaktivverdünner und (b) kettenabschließenden Reaktivverdünner oder Gemischen davon. Ausführungsformen sind bevorzugt, die wenigstens einen kettenverlängernden und/oder vernetzenden Reaktivverdünner verwenden. Kettenverlängernde und/oder vernetzende Reaktivverdünner umfassen aliphatische verzweigte C₂₄₋₆₆-Polycarbonsäuren, alicyclische C₂₄₋₆₆-Polycarbonsäuren und Partialester von Polycarbonsäuren mit wenigstens zwei unveresterten Carboxylgruppen. Verzweigte C₂₄₋₆₆-Polycarbonsäuren weisen vorzugsweise wenigstens eine von der längsten linearen Kohlenstoffkette abgehende Verzweigung auf, die wenigstens vier Kohlenstoffatome umfasst. Die verzweigten C₂₄₋₆₆-Polycarbonsäuren und/oder alicyclischen C₂₄₋₆₆-Polycarbonsäuren sind vorzugsweise ausgewählt unter dimeren Fettsäuren, trimeren Fettsäuren und Gemischen davon, die gegebenenfalls hydriert sind.

Die Oligomerisierung von ungesättigten Fettsäuren stellt eine bekannte elektrocyclische Reaktion dar, über die in Übersichtsartikeln beispielsweise von A. Behr in Fat Sei. Technol. 93, 340 (1991), G. Spiteller in Fat Sei. Technol. 94, 41 (1992) oder P. Daute et al. in Fat Sei. Technol. 95, 91 (1993) berichtet wird. Bei der Oligomerisierung treten durchschnittlich zwei bis drei Fettsäuren zusammen und bilden Dimere bzw. Trimere, die überwiegend verzweigte und/oder cycloaliphatische Strukturen aufweisen. Neben der Fraktion der Dimeren und Trimeren wird eine sogenannte Monomerfraktion erhalten, in der sich nicht umgesetzte Ausgangsstoffe und verzweigte Monomere befinden, die im Verlauf der Reaktion durch Isomerisierung entstanden sind. Daneben gibt es selbstverständlich auch eine Fraktion höherer Oligomeren, die jedoch in der Regel nicht von größerer Bedeutung ist. Die Oligomerisierung kann thermisch oder in Gegenwart von Edelmetallkatalysatoren durchgeführt werden. Vorzugsweise erfolgt die Reaktion in Gegenwart von Tonerden wie beispielsweise Montmorillonit, vgl. Fette, Seifen, Anstrichmitt. 72, 667 (1970). Die Regelung des Gehaltes an Dimeren und Trimeren bzw. der Umfang der Monomerfraktion kann durch die Reaktionsbedingungen gesteuert werden. Technische Gemische können schließlich auch destillativ aufgereinigt werden.

Als Ausgangsstoffe für die Oligomerisierung kommen technische ungesättigte Fettsäuren mit 12 bis 22, vorzugsweise 16 bis 18 Kohlenstoffatomen in Betracht. Typische Beispiele sind Palmoleinsäure, Ölsäure, Elaidylsäure, Petroselinylsäure, Linolsäure, Linolensäure, Konjuenfettsäure, Elaeostearinsäure, Ricinolsäure, Gadoleinsäure, Erucasäure sowie deren technische Gemische mit gesättigten Fettsäuren. Typische Beispiele für geeignete technische Gemische sind ungehärtete Spaltfettsäuren natürlicher Triglyceride mit lodzahlen im Bereich von 40 bis 140, wie etwa Palmfettsäure, Talgfettsäure, Rübölfettsäure, Sonnenblumenfettsäure und dergleichen. Bevorzugt sind Spaltfettsäuren mit einem hohen Gehalt an Ölsäure. Neben den Fettsäuren können auch deren Ester, vorzugsweise Methylester, dimerisiert werden. Es ist gleichfalls möglich, die Säure zu oligomerisieren und vor der Hydrierung in die Methylester zu überführen. Die Überführung der Estergruppe in die Säuregruppe gelingt in an sich bekannter Weise.

Dimerfettsäuren, die im Sinne der Erfindung besonders bevorzugt sind, werden durch Oligomerisierung von technischer Ölsäure erhalten und weisen vorzugsweise einen Dimergehalt von 50 bis 99 Gew.-% sowie einen Trimergehalt von 1 bis 50 Gew.-% auf. Der Gehalt an Monomeren kann 0 bis 15 Gew.-% betragen und falls erforderlich durch Destillation erniedrigt werden. Die Gew.-% sind dabei auf die Gesamtmenge an Fettsäureoligomer bezogen.

Geeignete Fettsäuredimere weisen die Formel HOOC-Dim-COOH auf, worin Dim für einen der folgenden Reste steht: 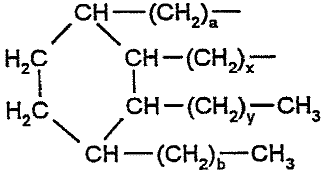 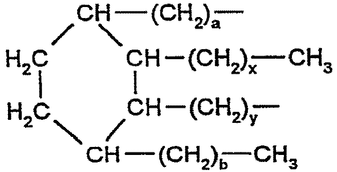 worin a + b = 12 und x +y = 14 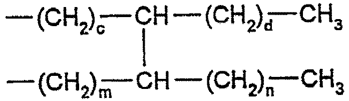 worin c + d = 19 und m + n = 14.

Alternativ oder zusätzlich können als Reaktivverdünner Partialester von Polycarbonsäuren verwendet werden. Als kettenverlängernde und/oder vernetzende Reaktivverdünner eignen sich z. B. Monoester von Trimellitsäure, Mono- oder Diester von Tetracarboxybenzol etc. Geeignete Alkoholkomponenten der Partialester umfassen n-Butanol, iso-Butanol, n-Hexanol, n-Heptanol, 2-Ethylhexanol, n-Oktanol, iso-Nonanol, cis-9-Octadecenol, Benzylalkohol etc.

Kettenabschließende Reaktivverdünner umfassen aliphatische verzweigte C₂₄₋₆₆-Monocarbonsäuren und alicyclische C₂₄₋₆₆-Monocarbonsäuren. Aliphatische verzweigte Monocarbonsäuren lassen sich durch Oxidation von Oxo-Aldehyden herstellen, die ihrerseits durch Hydroformylierung von Olefinoligomeren erhältlich sind.

Weitere kettenabschließende Reaktivverdünner umfassen Partialester von Polycarbonsäuren mit einer unveresterten Carboxylfunktionalität. Geeignete Säurekomponenten der Partialester umfassen Phthalsäure, Terephthalsäure, Isophthalsäure, Trimellitsäure, Tetracarboxybenzol, Naphthalindicarbonsäure, Adipinsäure, Sebacinsäure, Cyclohexandicarbonsäure etc. Vorzugsweise werden Partialester von aromatischen Polycarbonsäuren verwendet. Als kettenabschließende Reaktivverdünner können Phthalsäuremonoester, Terephthalsäuremonoester, Diester von Trimellitsäure, Triester von Tetracarboxybenzol, Naphthalindicarbonsäuremonoester, Adipinsäuremonoester, Sebacinsäuremonoester, Cyclohexandicarbonsäuremonoester etc. verwendet werden. Geeignete Alkoholkomponenten der Partialester umfassen n-Butanol, iso-Butanol, n-Hexanol,
n-Heptanol, 2-Ethylhexanol, n-Oktanol, iso-Nonanol, cis-9-Octadecenol, Benzylalkohol etc.

Die flüssige Isocyanat-reaktive Komponente und/oder die feste Isocyanat-reaktive Komponente umfassen eine aromatische C₈₋₁₈-Polycarbonsäure und/oder ein Anhydrid davon. Die aromatische C₈₋₁₈-Polycarbonsäure dient als Vernetzer und als Kohlendioxidgenerator. Die Mitverwendung einer aromatischen Polycarbonsäure trägt zur nicht brandweiterleitenden Eigenschaft der erhaltenen Schäume bei. In begrenztem Umfang kann die flüssige und/oder feste Isocyanat-reaktive Komponente außerdem eine nicht-aromatische C₄₋₁₈-Polycarbonsäure enthalten.

Vorzugsweise beträgt das Molverhältnis von aromatischen Carboxyl-Gruppen zur Summe von aromatischen und aliphatischen Carboxyl-Gruppen in der flüssigen Isocyanat-reaktiven Komponente und, sofern verwendet, der festen Isocyanat-reaktiven Komponente wenigstens 10 Mol-%, insbesondere wenigstens 15 Mol-%. Als aromatische Carboxyl-Gruppen werden solche Carboxyl-Gruppen angesehen, die direkt an einen aromatischen Ring gebunden sind. Als aliphatische Carboxyl-Gruppen werden solche Carboxyl-Gruppen angesehen, die an ein nicht-aromatisches Kohlenstoffatom gebunden sind. Zu den aliphatischen Carboxyl-Gruppen tragen der Reaktivverdünner (aliphatische verzweigte C₂₄₋₆₆-Polycarbonsäuren, alicyclische C₂₄₋₆₆-Polycarbonsäuren, aliphatische verzweigte C₂₄₋₆₆-Monocarbonsäuren, alicyclische
C₂₄₋₆₆-Monocarbonsäuren und Partialester nicht-aromatischer Polycarbonsäuren) und gegebenenfalls mitverwendete nicht-aromatische C₄₋₁₈-Polycarbonsäuren bei. Der Beitrag der Reaktivverdünner zu den aliphatischen Carboxylgruppen kann zweckmäßig berechnet werden als W/E, worin W die Einwaage an Reaktivverdünner (in g) und E das Equivalentgewicht (in g/mol) ist. Das Equivalentgewicht E kann seinerseits aus der Säurezahl AV (in mgKOH/g) berechnet werden als E = 56,11/AV, worin 56,11 das Molekulargewicht von KOH ist. Die Säurezahl AV wird üblicherweise von den Herstellern von Dimerfettsäuren oder Trimerfettsäuren spezifiziert.

In geeigneten Ausführungsformen beträgt das Gewichtsverhältnis von aromatischer C₈₋₁₈-Polycarbonsäure und/oder Anhydrid davon zum kettenverlängernden und/oder vernetzenden Reaktivverdünner und/oder kettenabschließenden Reaktivverdünner 1 : 20 bis 20 : 1, vorzugsweise 1 : 10 bis 10 : 1.

Geeignete aromatische Polycarbonsäuren sind aromatische C₈₋₁₈-Polycarbonsäuren, wie Phthalsäure, Terephthalsäure, Isophthalsäure, Aminoisophthalsäure, Trimellitsäure, Tetracarboxybenzol, Naphthalindicarbonsäure, Bisphenyldicarbonsäure etc. sowie deren Anhydride.

Geeignete nicht-aromatische Polycarbonsäuren sind aliphatische Polycarbonsäuren, wie Bernsteinsäure, Adipinsäure, Glutarsäure, Pimelinsäure, Korksäure, Azelainsäure, Sebacinsäure, Cyclohexyldicarbonsäuren, Tetrahydrophthalsäuren, Citronensäure, Weinsäure sowie Anhydride davon.

Optional umfasst die flüssige Isocyanat-reaktive Komponente und/oder die feste Isocyanat-reaktive Komponente ein Neutralisationsmittel zur Neutralisation der Polycarbonsäure. Bevorzugte Neutralisationsmittel sind Amine, insbesondere tertiäre Amine. Beispiele geeigneter Amine sind Triethylamin, Tri(n-propyl)-amin, N-Methyl-N,N-di(n-butyl)-amin, N-Methyl-piperidin, N-Methyl-morpholin, permethyliertes Diethylentriamin, Triethylendiamin (1,4-Diazabicyclo[2.2.2]octan, DABCO), Triethanolamin, N,N-Dimethylbenzylamin.

Optional umfasst die flüssige Isocyanat-reaktive Komponente Verbindungen, die mindestens zwei gegenüber Isocyanat reaktive Gruppen, beispielsweise -OH, -SH, -NH₂ oder -NHR², worin R² darin unabhängig voneinander Wasserstoff, Methyl, Ethyl, iso-Propyl, n-Propyl, n-Butyl, iso-Butyl, sec-Butyl oder tert-Butyl bedeuten kann, aufweisen.

Dies sind bevorzugt Diole oder Polyole, wie 2 bis 20 Kohlenstoffatome aufweisende Kohlenwasserstoffdiole, z.B. Ethylenglycol, 1,2-Propandiol, 1,3-Propandiol, 1,1-Dimethylethan-1,2-diol, 1,6-Hexandiol, 1,10-Dekandiol, Bis(4-hydroxycyclohexan)isopropyliden, Tetramethylcyclobutandiol, 1,2-, 1,3- oder 1,4-Cyclohexandiol, Cyclooctandiol, Norbornandiol, Pinandiol, Decalindiol, etc., deren Ester mit kurzkettigen Dicarbonsäuren, wie Adipinsäure, Cyclohexandicarbonsäure, oder aliphatische Diamine, wie Methylen-, und Isopropyliden-bis-(cyclohexylamin), Piperazin, 1,2-, 1,3- oder 1,4-Diaminocyclohexan, 1,2-, 1,3- oder 1,4-Cyclohexan-bis-(methylamin), etc., Dithiole oder mehrfunktionelle Alkohole, sekundäre oder primäre Aminoalkohole, wie Ethanolamin, Diethanolamin, Monopropanolamin, Dipropanolamin etc. oder Thioalkohole, wie Thioethylenglykol.

Weiterhin denkbar sind Diethylenglykol, Triethylenglykol, Dipropylenglykol, Tripropylenglykol, Neopentylglykol, Pentaerythrit, 1,2- und 1,4-Butandiol, 1,5-Pentandiol, 2-Methyl-1,5-pentandiol, 2-Ethyl-1,4-butandiol, 1,2-, 1,3- und 1,4-Dimethylolcyclohexan, 2,2-Bis(4-hydroxycyclohexyl)-propan, Glycerin, Trimethylolethan, Trimethylolpropan, Trimethylolbutan, Dipentaerythrit, Erythrit und Sorbit, 2-Aminoethanol, 3-Amino-1-propanol, 1-Amino-2-propanol oder 2-(2-Aminoethoxy)ethanol, Bisphenol A, oder Butantriol.

Weiterhin sind auch Polyether- oder Polyesterole oder Polyacrylatpolyole mit einer mittleren OH-Funktionalität von 2 bis 10 geeignet, sowie Polyamine, wie z. B. Polyethylenimin oder freie Amingruppen enthaltende Polymere von z. B. Poly-N-vinylformamid.

Optional umfasst die flüssige Isocyanat-reaktive Komponente geringe Mengen Wasser. Die zugegebene Menge Wasser beträgt vorzugsweise maximal 0,01 bis 0,2 Äquivalente, bezogen auf den NCO-Gehalt der Isocyanatkomponente. Der Zusatz von Wasser dient dazu, eine zusätzliche Treibreaktion einzuführen und/oder die Materialeigenschaften durch einen Anteil von Polyharnstoff zu modifizieren.

Im Allgemeinen erfolgt das Mischen der Komponenten in Gegenwart eines Polyadditionskatalysators. Der Polyadditionskatalysator gestattet den Ablauf der Decarboxylierung und Polyamidbildung unter milden Bedingungen. Vorzugsweise enthält die flüssige Isocyanatkomponente, die flüssige Isocyanat-reaktive Komponente und/oder, falls verwendet, die feste Isocyanat-reaktive Komponente einen Polyadditionskatalysator.

Als Polyadditionskatalysatoren können in der Polyurethanchemie üblicherweise verwendete Katalysatoren eingesetzt werden. Dies sind Verbindungen, die die Reaktion der reaktiven Wasserstoffatome, insbesondere der Polycarbonsäuren, mit den organischen Polyisocyanaten beschleunigen. Sowohl Lewis-Basen als auch Lewis-Säuren sind wirksame Katalysatoren. Die wichtigsten Lewis-Basen sind tertiäre Amine unterschiedlichster Struktur. Die wichtigsten katalytisch wirkenden Lewis-Säuren sind organische Metall-Verbindungen.

Der Anteil des Polyadditionskatalysators, bezogen auf das Gesamtgewicht der Komponenten beträgt vorzugsweise 0,01 bis 2 Gew.-%, besonders bevorzugt 0,02 bis 1 Gew.-% und insbesondere 0,05 bis 0,5 Gew.-%. In einer bevorzugten Ausführungsform der vorliegenden Erfindung werden neben einer Lewis-Base keine weiteren Katalysatoren eingesetzt.

Als Polyadditionskatalysator in Betracht kommen organische Metallverbindungen, vorzugsweise organische Titanverbindungen, wie Tetra-(2-ethylhexyl)titanat, oder organische Zinnverbindungen, wie Zinn(II)-salze von organischen Carbonsäuren, beispielsweise Zinn(II)-acetat, Zinn(II)-octoat, Zinn(II)-ethyl-hexanoat, Zinn(II)-laurat und die Dialkylzinn(IV)-salze von organischen Carbonsäuren, beispielsweise Dibutylzinndiacetat, Dibutylzinndilaurat, Dibutylzinnmaleat, Dioctylzinndiacetat, aber auch andere metallbasierte Katalysatoren wie Carboxylate der Erdalkalimetalle, z. B. Magnesiumstearat, aber auch Aluminiumsalze, Borate, etc. wie beschrieben in einer Übersicht in C. Gürtler, K. Danielmeier, Tetrahedron Letters 45 (2004) 2515-2521.

In Betracht kommen weiterhin tertiäre Amine wie Triethylamin, Tributylamin, N,N-Dimethylcyclohexylamin, N,N-Dimethylbenzylamin, N-Methylmorpholin, N-Ethylmorpholin, N-Cyclohexylmorpholin, N,N,N',N'-Tetramethylethylendiamin, N,N,N',N'-Tetramethylbutylendiamin, N,N,N',N'-Tetramethyl-1,6-hexylendiamin, Pentamethyl-diethylentriamin, Tetramethyl-diaminoethylether, Bis-(dimethylaminopropyl)-harnstoff, Dimethylpiperazin, N-Methylimidazol, 1,2-Dimethylimidazol, 1-Aza-bicyclo-[3.3.0]-octan, 1,4-Diaza-bicyclo-[2.2.2]-octan (DABCO), und Alkanolaminverbindungen wie Triethanolamin, Tris-isopropanolamin, N-Methyldiethanolamin und N-Ethyl-diethanolamin und Dimethylethanolamin.

Als Katalysatoren kommen weiter in Betracht: Tris-(dialkylamino)-s-hexahydrotriazine, insbesondere Tris-(N,N-dimethylamino)-s-hexahydrotriazin. In Betracht kommen weiterhin Tetraalkylammoniumsalze wie beispielsweise N,N,N-Trimethyl-N-(2-hydroxy-propyl)-formiat, N,N,N-Trimethyl-N-(2-hydroxy-propyl)-2-ethyl-hexanoat, Tetraalkyl-ammoniumhydroxide wie Tetramethylammoniumhydroxid, Alkalihydroxide wie Natriumhydroxid, Alkalialkoholate wie Natriummethylat und Kaliumisopropylat, sowie Alkali- oder Erdalkalisalze von Fettsäuren mit 1 bis 20 C-Atomen und gegebenenfalls seitenständigen OH-Gruppen.

Es können auch gegenüber Isocyanaten reaktive Katalysatoren eingesetzt werden. Sie enthalten neben wenigstens einer tertiären Aminogruppe eine primäre oder sekundäre Aminogruppe oder eine Hydroxylgruppe. Hierzu zählen beispielsweise N,N-Dimethylaminopropylamin, Bis-(Dimethylaminopropyl)-amin, N,N-Dimethylaminopropyl-N'-methyl-ethanolamin, Dimethylaminoethoxyethanol, Bis-(Dimethylaminopropyl)amino-2-propanol, N,N-Dimethylaminopropyl-dipropanolamin, N,N,N'-Trimethyl-N'-hydroxyethyl-bisaminoethyl-ether, N,N-Dimethylaminopropylharnstoff, N-(2-Hydroxypropyl)-imidazol, N-(2-Hydroxyethyl)-imidazol, N-(2-Aminopropyl)-imidazol und/oder die in EP-A 0 629 607 beschriebenen Umsetzungsprodukte aus Acetessigsäureethylester, Polyetherpolyolen und 1-(Dimethylamino)-3-amino-propan.

Bis(alkylamino)alkylether, wie Bis-(2-dimethylaminoethyl)ether oder 2,2'-Dimorpholinodiethylether, und 2-(2-Dialkylaminoalkoxy)alkanole, 2-(2-Dimethylaminoethoxy)ethanol, sind bevorzugt, weil sie neben Katalysatoren der Polyadditionsreaktion auch starke Blas- oder Treib-Katalysatoren (Blow-Katalysatoren) sind. Außerdem bevorzugt sind 1,8-Diazabicyclo[5.4.0]undec-7-en und DABCO.

Vorzugsweise enthält die flüssige Isocyanatkomponente und/oder die flüssige Isocyanat-reaktive Komponente, insbesondere die flüssige Isocyanat-reaktive Komponente, einen Schaumstabilisator. Schaumstabilisatoren werden üblicherweise in Mengen von 0,01 bis 5 Gew.-%, bezogen auf das Gesamtgewicht der Komponenten, eingesetzt. Als Schaumstabilisatoren sind oberflächenaktive Substanzen geeignet. Besonders bewährt haben sich modifizierte Polysiloxane, wie Trisiloxantenside, Polyethersiloxan oder Polysiloxan-Polyoxyalkylen-Blockpolymere. Derartige Verbindungen sind unter der Bezeichnung Tegostab® von Evonik erhältlich. Als nicht-Silicon-basierte Stabilisatoren lassen sich Copolymere auf Basis von Ethylenoxid und Butylenoxid, Copolymere, die aus N-Vinylpyrrolidon und Maleinsäureestern hergestellt werden, oder oligomere Polyacrylate mit Polyoxyalkylen- und Fluoralkanresten als Seitengruppen anführen.

Optional enthält die flüssige Isocyanatkomponente und/oder die flüssige Isocyanat-reaktive Komponente, insbesondere die flüssige Isocyanat-reaktive Komponente ein Lösungsmittel, um eine ausreichende Löslichkeit von Additiven, wie Polyadditionskatalysator, Polycarbonsäure, usw. zu erreichen. Lösungsmittel mit einem niedrigen Flammpunkt sind bevorzugt. Hierzu eignen sich Triethylphosphat, Dibutylglycolacetat, Biodiesel (Sovermol 1058), hochsiedende Erdölfraktionen (z. B. Total EDC Aliphatisches Base-Oil, Shellsol Aromatische Kohlenwasserstoffe), ionische Flüssigkeiten (Basionics) oder auch klassische Weichmacher wie Phthalate (z. B. Palatinol N).

Optional enthält die flüssige Isocyanatkomponente und/oder die flüssige Isocyanat-reaktive Komponente, insbesondere die flüssige Isocyanat-reaktive Komponente ein Dispergiermittel, um eine ausreichende Dispergierung von Additiven, wie Polyadditionskatalysator, Polycarbonsäure, usw. zu erreichen. Folgende Gruppen von Dispergiermitteln zeigen eine besonders gute Wirkung in den erfindungsgemäßen Zusammensetzungen:
(a) Phosphorestersalze von aminogruppenhaltigen Oligomeren oder Polymeren, wie beispielsweise Phosphorestersalze von gegebenenfalls fettsäuremodifizierten oder alkoxylierten (insbesondere ethoxylierten) Polyaminen, Phosphorestersalze von Epoxid-Polyamin-Addukten, Phosphorestersalze von aminogruppenhaltigen Acrylat- oder Methacrylatcopolymeren und Phosphorestersalze von Acrylat-Polyamin-Addukten,
(b) Mono- oder Diester der Phosphorsäure, wie beispielsweise Mono- oder Diester der Phosphorsäure mit Alkyl-, Aryl-, Aralkyl- oder Alkylaryl-Alkoxylaten (z. B. Phosphorsäure-mono- oder -di-ester von Nonylphenolethoxylaten, Isotridecylalkoholethoxylaten, butanolgestarteten Alkylenoxidpolyethern), Mono- oder Diester der Phosphorsäure mit Polyestern (z. B. Lactonpolyestern, wie Caprolactonpolyestern oder gemischten Caprolacton/Valerolacton-Polyestern),
(c) saure Dicarbonsäurehalbester, beispielsweise saure Dicarbonsäurehalbester (insbesondere der Bernsteinsäure, Maleinsäure oder Phthalsäure) mit Alkyl-, Aryl-, Aralkyl- oder Alkylaryl-Alkoxylaten (z. B. Nonylphenolethoxylaten, Isotridecylalkoholethoxylaten oder Butanol-gestarteten Alkylenoxid polyethern),
(d) Polyurethan-Polyamin-Addukte,
(e) polyalkoxylierte Mono- oder Diamine (z. B. ethyoxyliertes Oleylamin oder alkoxyliertes Ethylendiamin),
(f) Reaktionsprodukte von ungesättigten Fettsäuren mit Mono-, Di- und Polyaminen, Aminoalkoholen und ungesättigten 1,2-Dicarbonsäuren und deren Anhydriden und deren Salze und Umsetzungsprodukte mit Alkoholen und/oder Aminen.

Geeignete Dispergiermittel sind als Handelsprodukte unter der Handelsbezeichnung Disperbyk, z. B. Disperbyk 190, erhältlich.

Optional enthalten die flüssige Isocyanatkomponente und/oder die flüssige Isocyanat-reaktive Komponente, insbesondere die flüssige Isocyanat-reaktive Komponente einen Rheologie-Modifikator, insbesondere einen polymeren Rheologie-Modifikator, um eine geeignete Anfangsviskosität und/oder rheologisches Verhalten einzustellen. Geeignete Polyacrylsäuren oder deren Salze sind unter der Bezeichnung Sokalan® von BASF SE erhältlich. Geeignete kationische Polymere sind unter der Handelsbezeichnung Luviquat erhältlich.

Optional kann die flüssige Isocyanat-reaktive Komponente und/oder die feste Isocyanat-reaktive Komponente eine Silikatquelle enthalten. Hierzu eignen sich Kieselsäure, Wasserglas oder Wasserglas in Pulverform, z. B. mit einem SiO₂/Alkalioxid-Massenverhältnis im Bereich von etwa 2 : 0,8 bis 2 : 1,2.

In bestimmten Ausführungsformen enthält die flüssige Isocyanatkomponente, die flüssige Isocyanat-reaktive Komponente und/oder die feste Isocyanat-reaktive Komponente ein Flammschutzmittel. Geeignete Flammschutzmittel sind beispielsweise Trikresylphosphat, Tris-(2-chlorethyl)phosphat, Tris-(2-chlorpropyl)phosphat, Tris(1,3-dichlorpropyl)phosphat, Tris-(2,3-dibrompropyl)phosphat und Tetrakis-(2-chlorethyl)-ethylendiphosphat, Triphenylphosphat, Triethylphosphat, Tetrabrombisphenol A, Decabromdipentylether. Außer den bereits genannten halogensubstituierten Phosphaten können auch anorganische Flammschutzmittel, wie roter Phosphor, Aluminiumoxidhydrat, Antimonoxid, Antimontrioxid, Arsenoxid, Zinkborat, Ammoniumpolyphosphat, Blähgraphit und Calciumsulfat oder Cyanursäurederivate, wie z. B. Melamin oder Füllstoffe, wie Kalksteinmehl, verwendet werden. Außerdem können sowohl ungeblähte, als auch bereits geblähte Schichtmaterialien, wie Rohvermiculit oder Blähvermiculit, als Flammschutzmittel eingesetzt werden. Auch Mischungen aus mindestens zwei Flammschutzmitteln, wie z. B. Ammoniumpolyphosphaten und Melamin und/oder Blähgraphit können verwendet werden.

Vorzugsweise enthalten die Flammschutzmittel Blähgraphit und oligomeres Organophosphor-Flammschutzmittel. Blähgraphit ist allgemein bekannt.

Besonders bevorzugt sind anorganische Flammschutzmittel wie Ammoniumphosphat, roter Phosphor, Blähgraphit, Tonmineralien (Vermiculite, Bentonite, Talk), Aluminiumhydroxid, Magnesiumhydroxid oder Calciumhydroxid.

Die Erfindung betrifft auch ein Verfahren zum Verfüllen von Kavitäten im Bergbau, Tunnelbau, Tiefbau oder bei der Öl-und Gasgewinnung mit einem nicht brandweiterleitenden Polyamidschaum, wobei man die oben definierte flüssige Isocyanatkomponente, flüssige Isocyanat-reaktive Komponente und gegebenenfalls feste Isocyanat-reaktive Komponente vermischt und das Gemisch in die Kavität einbringt. Falls verwendet, kann die feste Isocyanat-reaktive Komponente mit Vorteil in der flüssigen Isocyanat-reaktiven Komponente dispergiert werden, bevor diese mit der flüssigen Isocyanatkomponente gemischt wird. Geeigneter Weise erfolgt das Vermischen in einem Mischkopf, zu dem die Komponenten getrennt gepumpt werden und in dem diese durch Verwendung eines Mischelements, welches sich im Mischkopf befindet, gemischt werden. Falls vorhandene natürliche Gesteinsformationen als Begrenzung gegen Auslaufen und/oder Durchsickern nicht ausreichend sind, kann eine Schalung vorgesehen werden. Da die Reaktion praktisch sofort erfolgt, schäumt das aus einem Auftragsgerät austretende Gemisch rasch auf und erstarrt sehr schnell, so dass der Bau dichter Schalungen, die im allgemeinen kostspielig sind, vermieden werden kann, ebenso wie der Verlust von Material durch Ausfließen im Fall der Auffüllung großer Hohlräume. Schließlich kann das erfindungsgemäße Verfahren mit Hilfe einfacher Schalungen angewandt werden, d.h. mit Schalungen, die nicht absolut dicht sind und mit Hilfe grober, locker zusammengefügter Bretter, gegebenenfalls unter Bedeckung mit einem Textil oder einer Folie, hergestellt werden, da das Durchsickern des sich ausdehnenden Schaums durch die nicht aneinanderstoßenden Teile auf Grund der sehr schnellen Ausdehnung auf einen sehr geringen Anteil begrenzt ist.

Die erfindungsgemäß erhältlichen Polyamidschäume können auch verwendet werden als Brandschutzschaum im Hochbau (z. B. für Mauerdurchbrüche, Brandriegel). Da sich diese Schäume im Vergleich zu Standard-Schäumen wie Polystyrol oder Polyurethan außerdem durch schwere Entflammbarkeit und Brennbarkeit, Hochtemperaturstabilität und nicht brandweiterleitende Eigenschaften auszeichnen, kann aufgrund der so verbesserten Materialversprödung und Verformung eine Anwendung für die Wärmedämmung von Industrierohren und/oder -anlagen oder beheizten Rohrleitungen und/oder (Öl-)Pipelines oder Heizungskomponenten von Vorteil sein. Ein weiteres mögliches Anwendungsgebiet stellt die akustische Dämpfung dar, die auf Baustellen appliziert oder vorgefertigt werden kann. Weniger geschäumte Versionen dieses Materials können auch als Injektionsmedium zum Kitten von Rissen im Bergbau oder Tiefbau verwendet werden oder im Ölfeldbereich beim Bohren oder Reparieren von Bohrlöchern.

Die Erfindung wird durch die nachfolgenden Beispiele und Figuren näher veranschaulicht.
Figur 1 zeigt den Temperatur-Zeit-Verlauf des Punking-Tests nach BS 5946:1980 für den Schaum gemäß Beispiel 9.
Figur 2 zeigt schematisch die Positionierung des Bunsenbrenners und der Temperatursonden beim Punking-Test.

Für die nachfolgenden Beispiele wurden folgende handelsübliche Chemikalien verwendet:

| | |
|---|---|
| Lupranat M10R (BASF) | Polymer-Methylendiphenylisocyanat (NCO-Gehalt 31,7 %, nominale NCO-Funktionalität 2,2) |
| Lupranat M20R (BASF) | Polymer-Methylendiphenylisocyanat (NCO-Gehalt 31,4 %, nominale NCO-Funktionalität 2,7) |
| Lupranat M200R (BASF) | Polymer-Methylendiphenylisocyanat (NCO-Gehalt 31 %, nominale NCO-Funktionalität 3) |
| Jeffcat ZR 50 (Huntsman) | N,N-Bis(3-dimethylaminopropyl)-N-isopropanolamin |
| Jeffcat ZR 70 (Huntsman) | 2-(2-Dimethylaminoethoxy)ethanol |
| Lupragen N106 (BASF) | 4,4-(Oxydi-2,1-ethandiyl)bismorpholin |
| Lupragen N201 (BASF) | Diazabicyclooctan |
| Lupragen N600 (BASF) | 1,3,5-Tris(dimethylaminopropyl)-sym-hexahydrotriazin |
| Lupragen TCPP (BASF) | Trichlorpropylphosphat |
| Empol 1062 (BASF) | Fettsäuredimer auf Tallöl-Basis (destilliert, teilweise hydriert) |
| Empol 1043 (BASF) | Fettsäuretrimer auf Tallöl-Basis |
| Pripol 1017 (Croda) | Fettsäuredimer (Säurezahl 190-197 mgKOH/g) |
| Pripol 1040 (Croda) | Fettsäuretrimer (Säurezahl 184-194 mgKOH/g) |
| Tegostab B 8407 (Evonik) | Polyoxyalkylenpolysiloxan |

Die im Folgenden beschriebenen flüssigen Komponenten 1 und 2 und gegebenenfalls die feste Komponente 2.1 werden mit einem mechanischen Rührer oder Holzspatel bei Umgebungstemperatur gemischt. Die Mischungen schäumen spontan auf und bilden nach dem Aushärten einen festen Polyamidschaum.

### Beispiel 1:

Komponente 1: 6 g Lupranat M20R.
Komponente 2: 5 g Empol 1062 und 0,5 g Jeffcat ZR 70.
Komponente 2.1: 1,2 g Isophthalsäure.

### Beispiel 2:

Komponente 1: 6 g Lupranat M20R.
Komponente 2: 5 g Empol 1062 und 0,5 g Jeffcat ZR 70 und 1,2 g Isophthalsäure (vorgelöst in 4 g Triethylphosphat).

### Beispiel 3:

Komponente 1: 6 g Lupranat M20R.
Komponente 2: 5 g Empol 1062 und 0,5 g Jeffcat ZR 70 und 0,2 g Tegostab B 8407 und 1,2 g Isophthalsäure (darin dispergiert).

### Beispiel 4:

Komponente 1: 6 g Lupranat M20R.
Komponente 2: 4,5 g Empol 1043 und 0,5 g Jeffcat ZR 70.
Komponente 2.1: 1,2 g Terephthalsäure.

### Beispiel 5:

Komponente 1: 6 g Lupranat M10R.
Komponente 2: 4,5 g Empol 1043 und 0,5 g Jeffcat ZR 70 und 0,2 g Tegostab B 8407.
Komponente 2.1: 1,2 g Isophthalsäure

### Beispiel 6:

Gemäß Beispiel 5 wurde ein Schaumstück mit einer Dichte von 70 kg/m³ hergestellt. Ein aus diesem Schaumstück resultierendes Prisma wurde einer mechanischen Druckprüfung unterzogen. Es ergab sich eine mittlere Druckfestigkeit von 0,2 N/mm² bei einer Stauchung von 10%.

### Beispiel 7:

Gemäß Beispiel 5 wurde ein Schaumstück mit einer Dichte von 75 kg/m³ hergestellt. Eine aus diesem Schaumstück resultierende Platte mit den Maßen 20x20x4 cm wurde auf ihre Wärmeleitfähigkeit untersucht. Diese wies eine Wärmeleitfähigkeit von 51 mW/(m*K) auf.

### Beispiel 8:

Ein gemäß Beispiel 5 hergestelltes Schaumstück wurde thermogravimetrisch untersucht. Die Zersetzung des Schaumes begann bei einer Temperatur von 420 °C.

### Beispiel 9:

Gemäß Beispiel 5 wurde ein Ansatz mit vierfacher Katalysatormenge (relativ zur Gesamtmenge der übrigen Komponenten) und einer erhöhten Ansatzgröße zur Herstellung von 200 g härtbarer Mischung zur Untersuchung der Reaktionswärme durchgeführt. Die auf 30 °C vorgewärmten Komponenten wurden vermischt und die Reaktionstemperatur während des Schäumvorgangs gemessen. Die maximale Reaktionstemperatur betrug 50°C.

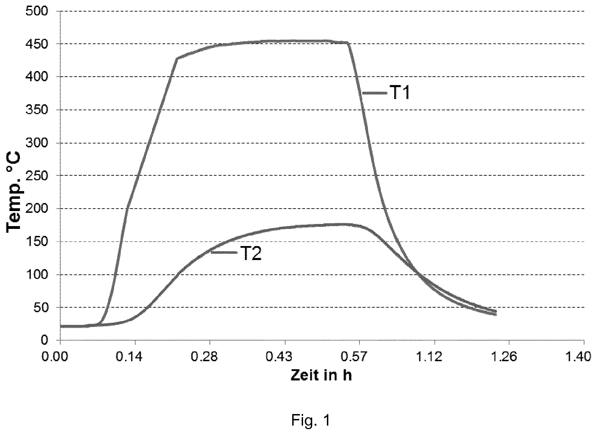

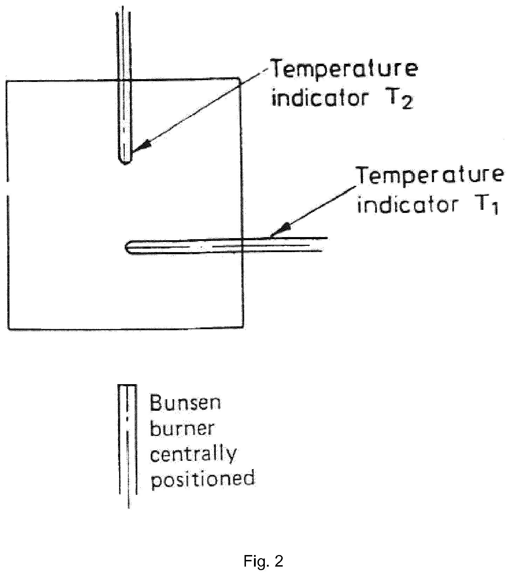

Ein aus dem resultierenden Schaumblock erhaltener 12x12x12 cm großer Würfel mit einer Dichte von 45 kg/m³ wurde zur Untersuchung der Brandweiterleitung einem Punking-Test nach BS 5946:1980 unterzogen. Dabei wurden 2 Temperatursonden in das Schaumstück eingeführt und der Schaum anschließend für 50 min mit entleuchteter Bunsenbrennerflamme beflammt (siehe Figur 2). Nach Ende der Beflammung wurde die Temperatur an der Temperatursonde T2 so lange gemessen, bis sie auf < 40° C gesunken war; der Temperaturverlauf ist in Figur 1 dargestellt. Im Versuch sanken die aufgezeichneten Temperaturen nach Beendigung der Beflammung sofort. Der Brand bestand also weder weiter, noch breitete er sich aus. Der aufgeschnittene Schaumwürfel war nach dem Test im oberen Drittel unbeschädigt. Im geschädigten Bereich des Prüfkörpers blieb der Schaum in Form einer verkohlten Substanz mit einer Rest-Festigkeit zurück. Da der Brand nicht weiterbestand, und es während des Tests zu keinem vollständigen Durchkokeln des Materials kam, bestand der Schaumkörper den Test.

### Beispiel 10 (Vergleichsbeispiel):

Komponente 1: 6 g Lupranat M10R.

Komponente 2: 4 g Pripol 1017, 2 g Pripol 1040 und 0,6 g Wasser und 1 g 4,4-(Oxydi-2,1-ethandiyl)bismorpholin (Lupragen N106) und 0,5 g Tegostab B 8407. 14 s nach Vermischen der ersten Komponente mit der zweiten Komponente beginnt die Mischung aufzuschäumen. Der Schäumvorgang endet nach 2 min mit einer 14-fachen Volumenzunahme. Es entsteht ein klebfreier, fester Schaum, der im Gegensatz zu den Schäumen aus den Beispielen 1-5 eine sehr feine Schaumstruktur aufweist.

### Beispiel 11:

Komponente 1: 6 g Lupranat M10R.
Komponente 2: 4 g Pripol 1017, 2 g Pripol 1040 und 0,6 g Wasser und 1 g 4,4-(Oxydi-2,1-ethandiyl)bismorpholin (Lupragen N106) und 0,5 g Tegostab B 8407. Komponente 2.1: 1,2 g Isophthalsäure.

Im Gegensatz zu den Schäumen aus den Beispielen 1-5 weist dieser Schaum eine sehr feine Schaumstruktur auf.

### Beispiel 12:

Komponente 1: 6 g Lupranat M20R.
Komponente 2: 2 g Pripol 1017, 4 g Pripol 1040, 0,6 g Wasser, 0,15 g 4,4-(Oxydi-2,1-ethandiyl)bismorpholin (Lupragen N106), 1,0 g Jeffcat ZR50, 0,5 g Tegostab B 8407 und 3 g Isophthalsäure (homogen darin dispergiert).

Der resultierende Schaum weist eine feinere Schaumstruktur als die Beispiele 1-5 auf. Ein nach dieser Rezeptur hergestelltes Schaumstück wurde analog zu Beispiel 9 einem Punking-Test nach BS 5946:1980 unterzogen. Der Schaumkörper bestand den Test. Im Vergleich zu den Schäumen aus den Beispielen 10 und 11 weist dieser Schaum ein besseres Brandverhalten auf, d. h. er ist schwerer entflammbar, selbsterlöschend, carbonisiert und schmilzt weniger an.

### Beispiel 13:

Komponente 1: 6 g Lupranat M20R.
Komponente 2: 2 g Pripol 1017, 4 g Pripol 1040, 0,6 g Wasser, 0,15 g 4,4-(Oxydi-2,1-ethandiyl)bismorpholin (Lupragen N106), 1,0 g Jeffcat ZR50, 0,5 g Tegostab B 8407, 2 g Isophthalsäure und 1 g Trimellitsäure (homogen darin dispergiert).

Der resultierende Schaum weist eine feinere Schaumstruktur als die Beispiele 1-5, jedoch ein besseres Brandverhalten als die Beispiele 10 und 11 auf (schwerer entflammbar, selbsterlöschend, carbonisiert und schmilzt weniger an).

### Beispiel 14:

Polyamidschäume wurden aus den in der folgenden Tabelle zusammengefassten Komponenten und Einsatzmengen (in g) wie folgt hergestellt: Alle Komponenten mit Ausnahme des Lupranat M200R wurden gemischt; dann wurde das Lupranat M200R zugemischt. Die Mischungen schäumten auf und bildeten nach dem Aushärten einen festen Polyamidschaum. Aus den Schaumstücken wurde nach 24 h ein 12x12x12 cm³ großer Würfel ausgeschnitten. Das Brandverhalten der Würfel wurde in dem in Beispiel 9 beschriebenen Punking-Test untersucht. Die nach 10 bzw. 20 Minuten erreichten Temperaturen T1 (Boden) und T2 (Mitte) sind ebenfalls in der Tabelle angegeben.

| | A | B | C-1 | C-2 | C-3 |
|---|---|---|---|---|---|
| Lupranat M200R | 72,0 | 72,0 | 63,5 | 55,8 | 51,3 |
| Isophthalsäure | 40,0 | | 31,3 | 24,4 | 17,6 |
| Adipinsäure | | 35,0 | | | |
| Pripol 1040 | 102,0 | 102,0 | 120,0 | 133,4 | 146,3 |
| Wasser | 0,6 | 0,6 | 0,6 | 0,6 | 0,6 |
| Lupragen N201 | 8,0 | 8,0 | 8,0 | 8,0 | 8,0 |
| Lupragen N600 | 4,0 | 4,0 | 4,0 | 4,0 | 4,0 |
| Lupragen TCPP | 25,0 | 25,0 | 25,0 | 25,0 | 25,0 |
| Triethylphosphat | 15,0 | 15,0 | 15,0 | 15,0 | 15,0 |
| T1(nach 10/20* min) | 364* | 359* | 140 | 158 | 239 |
| T2(nach 10/20* min) | 75* | 172* | 46 | 120 | 90 |

Der Vergleich der Versuche A und B zeigt, dass nach 20 min bei vergleichbarer Temperatur T1 die Temperatur T2 im Versuch A nur mäßig erhöht ist, während T2 im Versuch B deutlich stärker erhöht ist. Dies belegt, dass Schaum A ein weniger brandweiterleitendes Verhalten zeigt.

Die Reihe C-1, C-2 und C-3 zeigt, dass sich mit abnehmendem Verhältnis Isophthalsäure/Pripol 1040 die Brennbarkeit des Schaums erhöht, erkennbar an der stärkeren Erhöhung der Temperatur T1 nach 10 min.

## Patentansprüche

1. Verfahren zur Herstellung von nicht brandweiterleitenden Polyamidschäumen durch Vermischen
(i) einer flüssigen Isocyanatkomponente, die wenigstens ein Polyisocyanat enthält und worin das Molverhältnis von aromatischen Isocyanat-Gruppen zur Summe von aromatischen und aliphatischen Isocyanat-Gruppen wenigstens 60 Mol-% beträgt, mit
(ii) wenigstens einer flüssigen Isocyanat-reaktiven Komponente, welche einen Reaktivverdünner enthält und der Reaktivverdünner umfasst
(a) einen kettenverlängernden und/oder vernetzenden Reaktivverdünner, der ausgewählt ist unter aliphatischen verzweigten C₂₄₋₆₆-Polycarbonsäuren, alicyclischen C₂₄₋₆₆-Polycarbonsäuren und Partialestern von Polycarbonsäuren mit wenigstens zwei unveresterten Carboxylgruppen und/oder
(b) einen kettenabschließenden Reaktivverdünner, der ausgewählt ist unter aliphatischen verzweigten C₂₄₋₆₆-Monocarbonsäuren, alicyclischen C₂₄₋₆₆-Monocarbonsäuren und Partialestern von Polycarbonsäuren mit einer unveresterten Carboxylgruppe, und
(iii) gegebenenfalls einer festen Isocyanat-reaktiven Komponente,
wobei die flüssige Isocyanat-reaktive Komponente und/oder die feste Isocyanat-reaktive Komponente eine aromatische C₈₋₁₈-Polycarbonsäure und/oder ein Anhydrid davon umfasst.

2. Verfahren nach Anspruch 1, **dadurch gekennzeichnet, dass** die flüssige Isocyanatkomponente Diphenylmethandiisocyanat, eine Mischung aus monomerem Diphenylmethandiisocyanat und höherkernigen Homologen des Diphenylmethandiisocyanats oder Präpolymere des Diphenylmethandiisocyanats oder Mischungen davon enthält.

3. Verfahren nach Anspruch 1 oder 2, **dadurch gekennzeichnet, dass** die aliphatische, verzweigte C₂₄₋₆₆-Polycarbonsäure und/oder alicyclische C₂₄₋₆₆-Polycarbonsäure ausgewählt ist unter dimeren Fettsäuren, trimeren Fettsäuren und Gemischen davon, die gegebenenfalls hydriert sind.

4. Verfahren nach einem der vorhergehenden Ansprüche, **dadurch gekennzeichnet, dass** das Molverhältnis von aromatischen Carboxyl-Gruppen zur Summe von aromatischen und aliphatischen Carboxyl-Gruppen in (ii) und (iii) wenigstens 10 Mol-% beträgt.

5. Verfahren nach einem der vorhergehenden Ansprüche, **dadurch gekennzeichnet, dass** die flüssige Isocyanatkomponente, die flüssige Isocyanat-reaktive Komponente und/oder die feste Isocyanat-reaktive Komponente einen Polyadditionskatalysator enthält.

6. Verfahren nach Anspruch 5, **dadurch gekennzeichnet, dass** der Polyadditionskatalysator ausgewählt ist unter zinnorganischen Verbindungen, tertiären Aminen und Erdalkalimetallsalzen.

7. Verfahren nach einem der vorhergehenden Ansprüche, **dadurch gekennzeichnet, dass** die flüssige Isocyanatkomponente und/oder die flüssige Isocyanat-reaktive Komponente einen Schaumstabilisator enthält.

8. Verfahren nach einem der vorhergehenden Ansprüche, **dadurch gekennzeichnet, dass** die flüssige Isocyanatkomponente, die flüssige Isocyanat-reaktive Komponente und/oder die feste Isocyanat-reaktive Komponente ein Flammschutzmittel enthält.

9. Verfahren zum Verfüllen von Kavitäten im Bergbau, Tunnelbau, Tiefbau oder bei der Öl-und Gasgewinnung mit einem nicht brandweiterleitenden Polyamidschaum, wobei man die flüssige Isocyanatkomponente, die flüssige Isocyanat-reaktive Komponente und gegebenenfalls die feste Isocyanat-reaktive Komponente wie in Anspruch 1 definiert vermischt und das Gemisch in die Kavität einbringt.

10. Verfahren nach Anspruch 9, **dadurch gekennzeichnet, dass** die Kavität mit einer Schalung begrenzt ist und man das Gemisch in die begrenzte Kavität einbringt.

11. Polyamidschaum erhältlich nach dem Verfahren nach einem der Ansprüche 1 bis 8.

12. Verwendung des Polyamidschaums nach Anspruch 11 als Brandschutzschaum.

13. Verwendung des Polyamidschaums nach Anspruch 11 als Wärmedämmung.

14. Verwendung des Polyamidschaums nach Anspruch 11 als akustische Dämpfung.

## Claims

1. Process for producing polyamide foams which do not propagate fire by mixing
(i)a liquid isocyanate component which contains at least one polyisocyanate and in which the molar ratio of aromatic isocyanate groups to the sum of aromatic and aliphatic isocyanate groups is at least 60 mol% with
(ii) at least one liquid isocyanate-reactive component which contains a reactive diluent, where the reactive diluent comprises
(a) a chain-extending and/or crosslinking reactive diluent selected from among aliphatic branched C₂₄₋₆₆-polycarboxylic acids, alicyclic C₂₄₋₆₆-polycarboxylic acids and partial esters of polycarboxylic acids having at least two unesterified carboxyl groups and/or
(b) a chain-terminating reactive diluent selected from among aliphatic branched C₂₄₋₆₆-monocarboxylic acids, alicyclic C₂₄₋₆₆-monocarboxylic acids and partial esters of polycarboxylic acids having one unesterified carboxyl group, and
(iii) optionally a solid isocyanate-reactive component,
wherein the liquid isocyanate-reactive component and/or the solid isocyanate-reactive component comprises an aromatic C₈₋₁₈-polycarboxylic acid and/or an anhydride thereof.

2. Process according to Claim 1, **characterized in that** the liquid isocyanate component contains diphenylmethane diisocyanate, a mixture of monomeric diphenylmethane diisocyanate and homologues of diphenylmethane diisocyanate having more than two rings or prepolymers of diphenylmethane diisocyanate or mixtures thereof.

3. Process according to Claim 1 or 2, **characterized in that** the aliphatic, branched C₂₄₋₆₆-polycarboxylic acid and/or alicyclic C₂₄₋₆₆-polycarboxylic acid is selected from among dimeric fatty acids, trimeric fatty acids and mixtures thereof, which are optionally hydrogenated.

4. Process according to any of the preceding claims, **characterized in that** the molar ratio of aromatic carboxyl groups to the sum of aromatic and aliphatic carboxyl groups in (ii) and (iii) is at least 10 mol%.

5. Process according to any of the preceding claims, **characterized in that** the liquid isocyanate component, the liquid isocyanate-reactive component and/or the solid isocyanate-reactive component contains a polyaddition catalyst.

6. Process according to Claim 5, **characterized in that** the polyaddition catalyst is selected from among tin-organic compounds, tertiary amines and alkaline earth metal salts.

7. Process according to any of the preceding claims, **characterized in that** the liquid isocyanate component and/or the liquid isocyanate-reactive component contains a foam stabilizer.

8. Process according to any of the preceding claims, **characterized in that** the liquid isocyanate component, the liquid isocyanate-reactive component and/or the solid isocyanate-reactive component contains a flame retardant.

9. Process for filling cavities in mining, tunnel construction, civil engineering or in oil and gas recovery using a polyamide foam which does not propagate fire, wherein the liquid isocyanate component, the liquid isocyanate-reactive component and optionally the solid isocyanate-reactive component as defined in Claim 1 are mixed and the mixture is introduced into the cavity.

10. Process according to Claim 9, **characterized in that** the cavity is delimited by means of formwork and the mixture is introduced into the delimited cavity.

11. Polyamide foam obtainable by the process according to any of Claims 1 to 8.

12. Use of the polyamide foam according to Claim 11 as fire protection foam.

13. Use of the polyamide foam according to Claim 11 as thermal insulation.

14. Use of the polyamide foam according to Claim 11 as acoustic damping.

## Revendications

1. Procédé de fabrication de mousses de polyamide présentant des caractéristiques de non-propagation de la flamme par mélange de :
(i) un composant isocyanate liquide, qui contient au moins un polyisocyanate et dans lequel le rapport molaire entre les groupes isocyanate aromatiques et la somme des groupes isocyanate aromatiques et aliphatiques est d'au moins 60 % en moles, avec
(ii) au moins un composant réactif avec les isocyanates liquide, qui contient un diluant réactif et le diluant réactif comprend :
(a) un diluant réactif allongeant les chaînes et/ou réticulant, qui est choisi parmi les acides polycarboxyliques en C₂₄₋₆₆ aliphatiques ramifiés, les acides polycarboxyliques en C₂₄₋₆₆ alicycliques et les esters partiels d'acides polycarboxyliques contenant au moins deux groupes carboxyle non estérifiés, et/ou
(b) un diluant réactif terminant les chaînes, qui est choisi parmi les acides monocarboxyliques en C₂₄₋₆₆ aliphatiques ramifiés, les acides monocarboxyliques en C₂₄₋₆₆ alicycliques et les esters partiels d'acides polycarboxyliques contenant un groupe carboxyle non estérifié, et
(iii) éventuellement un composant réactif avec les isocyanates solide,
le composant réactif avec les isocyanates liquide et/ou le composant réactif avec les isocyanates solide comprenant un acide polycarboxylique en C₈₋₁₈ aromatique et/ou un anhydride de celui-ci.

2. Procédé selon la revendication 1, **caractérisé en ce que** le composant isocyanate liquide contient du diisocyanate de diphénylméthane, un mélange de diisocyanate de diphénylméthane monomère et d'homologues à nombre de noyaux plus élevé du diisocyanate de diphénylméthane ou de prépolymères du diisocyanate de diphénylméthane ou des mélanges de ceux-ci.

3. Procédé selon la revendication 1 ou 2, **caractérisé en ce que** l'acide polycarboxylique en C₂₄₋₆₆ aliphatique ramifié et/ou l'acide polycarboxylique en C₂₄₋₆₆ alicyclique sont choisis parmi les acides gras dimères, les acides gras trimères et leurs mélanges, qui sont éventuellement hydrogénés.

4. Procédé selon l'une quelconque des revendications précédentes, **caractérisé en ce que** le rapport molaire entre les groupes carboxyle aromatiques et la somme des groupes carboxyle aromatiques et aliphatiques dans (ii) et (iii) est d'au moins 10 % en moles.

5. Procédé selon l'une quelconque des revendications précédentes, **caractérisé en ce que** le composant isocyanate liquide, le composant réactif avec les isocyanates liquide et/ou le composant réactif avec les isocyanates solide contiennent un catalyseur de polyaddition.

6. Procédé selon la revendication 5, **caractérisé en ce que** le catalyseur de polyaddition est choisi parmi les composés organiques d'étain, les amines tertiaires et les sels de métaux alcalino-terreux.

7. Procédé selon l'une quelconque des revendications précédentes, **caractérisé en ce que** le composant isocyanate liquide et/ou le composant réactif avec les isocyanates liquide contiennent un stabilisateur de mousse.

8. Procédé selon l'une quelconque des revendications précédentes, **caractérisé en ce que** le composant isocyanate liquide, le composant réactif avec les isocyanates liquide et/ou le composant réactif avec les isocyanates solide contiennent un retardateur de flamme.

9. Procédé de remplissage de cavités dans l'industrie minière, dans la construction de tunnels, dans la construction souterraine ou lors de l'extraction de pétrole et de gaz avec une mousse de polyamide présentant des caractéristiques de non-propagation de la flamme, dans lequel le composant isocyanate liquide, le composant réactif avec les isocyanates liquide et éventuellement le composant réactif avec les isocyanates solide tels que définis dans la revendication 1 sont mélangés et le mélange est introduit dans la cavité.

10. Procédé selon la revendication 9, **caractérisé en ce que** la cavité est délimitée avec un coffrage et le mélange est introduit dans la cavité délimitée.

11. Mousse de polyamide pouvant être obtenue par le procédé selon l'une quelconque des revendications 1 à 8.

12. Utilisation de la mousse de polyamide selon la revendication 11 en tant que mousse de protection contre l'incendie.

13. Utilisation de la mousse de polyamide selon la revendication 11 en tant qu'isolation thermique.

14. Utilisation de la mousse de polyamide selon la revendication 11 en tant qu'isolation acoustique.
